# FASCICULE DE BREVET EUROPEEN

(11) **EP 3 973 343 B1**
(45) Date de publication et mention de la délivrance du brevet: **05.06.2024**
(21) Numéro de dépôt: 20785774.9
(22) Date de dépôt: 18.06.2020
(51) Int. Cl.: G02B 23/12, G02B 27/01, G02B 26/02, H04N 23/20

(54) **APPAREIL DE VISION OFFRANT UNE VISION NOCTURNE ET UNE VISION DIRECTE D'UNE SCÈNE ENVIRONNANTE**
SICHTVORRICHTUNG FÜR NACHTSICHT UND DIREKTE SICHT EINER UMGEBUNGSSZENE
VISION APPARATUS PROVIDING NIGHT VISION AND DIRECT VISION OF A SURROUNDING SCENE

(30) Priorité: 20.06.2019 FR 1906602
(43) Date de publication de la demande: 30.03.2022
(73) Titulaire: Photonis France, 19100 Brive (FR)
(72) Inventeur: DELTEL, Geoffroy, 19100 BRIVE (FR)
(74) Mandataire: Cabinet Laurent & Charras
(86) Numéro de dépôt international: PCT/FR2020/051056
(87) Numéro de publication internationale: WO 2020/254765

(56) Documents cités:
- US-A1- 2011 240 834
- US-A1- 2011 254 855
- US-A1- 2012 242 724
- US-A1- 2016 217 327

## Description

### DOMAINE TECHNIQUE

L'invention se rapporte au domaine des appareils de vision destinés à être montés sur la tête d'un utilisateur, et aptes à lui offrir à la fois une vue directe d'une scène environnante et une vue d'une image virtuelle.

### ÉTAT DE LA TECHNIQUE ANTÉRIEURE

On connaît dans l'art antérieur des appareils de vision de type lunette, casque, ou masque, aptes à être montés sur la tête d'un utilisateur pour lui offrir à la fois une vue d'une scène environnante, vue au travers d'un écran au moins partiellement transparent, et une vue d'une image virtuelle. De tels appareils forment des appareils de vision en réalité augmentée. L'image virtuelle est formée à distance de l'œil, puis amenée jusque dans le champ de vision de l'utilisateur par un élément de déport, partiellement transparent, qui s'étend jusque devant l'œil.

L'une des idées à la base de l'invention consiste à adapter ce concept au domaine de la vision nocturne, en proposant un appareil de vision destiné à être monté sur la tête d'un utilisateur, apte à lui offrir à la fois une vision directe d'une scène environnante et une vue de la même scène en vision nocturne. Un dispositif de vision pour la superposition d'une image en vision nocturne et d'une image en vision directe est connue de US-A1-2016/217327.

Un autre objectif de la présente invention est de faire en sorte qu'un tel appareil de vision offre une grande discrétion d'utilisation sous des conditions de faible éclairage.

L'invention est exposée dans le jeu de revendications joint.

### PRÉSENTATION DE L'INVENTION

Cet objectif est atteint avec un appareil de vision selon la revendication 1.

Dans tout le texte, on comprend que le terme « période » se rapporte à une durée, ou intervalle de temps.

L'appareil de vision selon l'invention est apte à offrir à l'utilisateur à la fois une vision directe d'une scène environnante, vue en transparence au travers de l'élément de déport au moins, et une vue en vision nocturne de la même scène, correspondant aux premières images virtuelles formées par le dispositif de vision nocturne et projetées dans le champ de vision de l'utilisateur.

L'élément de commutation selon l'invention peut prendre alternativement une position ouverte ou une position fermée.

Dans sa position ouverte, l'élément de commutation autorise l'émission des premières images virtuelles par le dispositif de vision nocturne ou leur transfert depuis le dispositif de vision nocturne vers l'élément de déport. Un rayonnement lumineux provenant du dispositif de vision nocturne peut alors former des réflexions parasites au niveau de l'élément de déport et/ou sur l'œil de l'utilisateur et/ou sur la peau de l'utilisateur dans une zone du visage proche de l'œil.

Dans sa position fermée, l'élément de commutation bloque l'émission des premières images virtuelles par le dispositif de vision nocturne ou leur transfert depuis le dispositif de vision nocturne vers l'élément de déport. Dans ce cas, aucun rayonnement lumineux provenant du dispositif de vision nocturne n'est susceptible de former des réflexions parasites au niveau de l'élément de déport et/ou sur l'œil de l'utilisateur et/ou sur la peau de l'utilisateur dans une zone du visage proche de l'œil.

De la même manière, l'obturateur selon l'invention peut prendre alternativement une position ouverte ou une position fermée.

Dans sa position ouverte, l'obturateur laisse passer la lumière depuis la scène environnante jusqu'à l'œil, offrant ainsi à l'utilisateur une vision directe de la scène environnante.

Dans sa position fermée, l'obturateur bloque le passage de la lumière entre la scène environnante et l'œil de l'utilisateur. L'utilisateur est alors empêché d'observer directement la scène environnante. Dans cette position, l'obturateur empêche également qu'un rayonnement lumineux provenant du dispositif de vision nocturne, se réfléchissant dans l'élément de déport et/ou sur l'œil de l'utilisateur et/ou sur la peau de l'utilisateur dans une zone du visage proche de l'œil, puisse être vu par un observateur tiers. Ce blocage des réflexions parasites par l'obturateur est d'autant plus pertinent dans des conditions de faibles éclairages, dans lesquelles ces dernières pourraient être facilement repérées par un observateur tiers

Le dispositif de pilotage selon l'invention permet que, pendant au moins une partie du temps durant lequel l'élément de commutation est en position ouverte, l'obturateur soit en position fermée. Ainsi, pendant au moins une partie du temps durant lequel un rayonnement lumineux provenant du dispositif de vision nocturne est susceptible de former des réflexions parasites au niveau de l'élément de déport et/ou sur l'œil de l'utilisateur et/ou sur la peau de l'utilisateur dans une zone du visage proche de l'œil, l'obturateur empêche ces réflexions parasites d'être vues par un observateur tiers.

De façon symétrique, le dispositif de pilotage selon l'invention permet également que, pendant au moins une partie du temps durant lequel l'élément de commutation est en position fermée, l'obturateur soit en position ouverte. Ainsi, pendant au moins une partie du temps durant lequel aucun rayonnement lumineux provenant du dispositif de vision nocturne n'est susceptible de former des réflexions parasites au niveau de l'élément de déport et/ou sur l'œil de l'utilisateur et/ou sur la peau de l'utilisateur dans une zone du visage proche de l'œil, l'obturateur autorise pour l'utilisateur une vision directe de la scène environnante. Dit encore autrement, pendant au moins une partie du temps durant lequel aucun rayonnement lumineux provenant du dispositif de vision nocturne ne risque d'être vu par un observateur tiers, l'obturateur autorise pour l'utilisateur une vision directe de la scène environnante.

L'appareil de vision offre ainsi à la fois une vue directe de la scène environnante, et la vue de la même scène en vision nocturne. Ces deux vues de la scène environnante ne sont pas offertes à l'utilisateur aux mêmes instants, ce qui permet de garantir une grande discrétion d'utilisation de l'appareil de vision, même sous des conditions de faible éclairage.

Selon l'invention, le dispositif de pilotage présente un mode de fonctionnement dans lequel il est configuré pour :
- piloter des premiers cycles successifs d'ouverture et de fermeture de l'obturateur ; et
- piloter des seconds cycles successifs d'ouverture et de fermeture de l'élément de commutation ;
où à chaque premier cycle et chaque second cycle, l'obturateur est fermé pendant tout ou partie de la période durant laquelle l'élément de commutation est ouvert, et inversement.

Avantageusement, le dispositif de pilotage est apte à piloter une variation d'un rapport cyclique des premiers cycles successifs d'ouverture et de fermeture de l'obturateur et/ou une variation d'un rapport cyclique des seconds cycles successifs d'ouverture et de fermeture de l'élément de commutation. Le rapport cyclique d'un premier cycle est égal à la durée pendant laquelle l'obturateur est en position ouverte durant ce premier cycle divisée par la durée totale de ce premier cycle. Le rapport cyclique d'un second cycle est égal à la durée pendant laquelle l'élément de commutation est en position ouverte durant ce second cycle divisée par la durée totale de ce second cycle.

On peut considérer que le pilotage selon des cycles successifs d'ouverture et de fermeture définit un signal périodique, avec le cas échéant un rapport cyclique variable au cours du temps. Le signal périodique est de préférence à fréquence fixe. En variante, ce signal périodique peut être à fréquence variable au cours du temps.

Le dispositif de pilotage présente avantageusement un mode de fonctionnement dans lequel il est configuré pour piloter l'ouverture et la fermeture de l'obturateur ainsi que l'ouverture et la fermeture de l'élément de commutation de sorte que l'obturateur soit fermé pendant tout le temps où l'élément de commutation est ouvert, et inversement.

D'autres caractéristiques avantageuses de l'invention sont mentionnées dans les revendications dépendantes de la revendication 1.

L'invention couvre également un procédé mis en oeuvre selon la revendication 9.

D'autres caractéristiques avantageuses du procédé selon l'invention sont mentionnées dans les revendications.

### BRÈVE DESCRIPTION DES FIGURES

La présente invention sera mieux comprise à la lecture de la description d'exemples de réalisation donnés à titre purement indicatif et nullement limitatif, en faisant référence aux dessins annexés sur lesquels :
[Fig. 1A] illustre de façon schématique un appareil de vision selon l'invention, monté sur la tête d'un utilisateur ;
[Fig. 1B] illustre de façon schématique un premier mode de réalisation d'un appareil de vision selon l'invention ;
[Fig. 1C] illustre de façon schématique l'appareil de vision de la figure 1B, dans une première configuration ;
[Fig. 1D] illustre de façon schématique l'appareil de vision de la figure 1B, dans une deuxième configuration ;
[Fig. 2] illustre de façon schématique un deuxième mode de réalisation d'un appareil de vision selon l'invention ;
[Fig. 3] illustre de façon schématique un troisième mode de réalisation d'un appareil de vision selon l'invention ;
[Fig. 4] illustre de façon schématique un quatrième mode de réalisation d'un appareil de vision selon l'invention ;
[Fig. 5A] illustre de façon schématique un procédé mis en oeuvre dans un appareil de vision selon l'invention ; et
[Fig. 5B] illustre de façon schématique un cinquième mode de réalisation d'un appareil de vision selon l'invention.

### DESCRIPTION DES MODES DE RÉALISATION

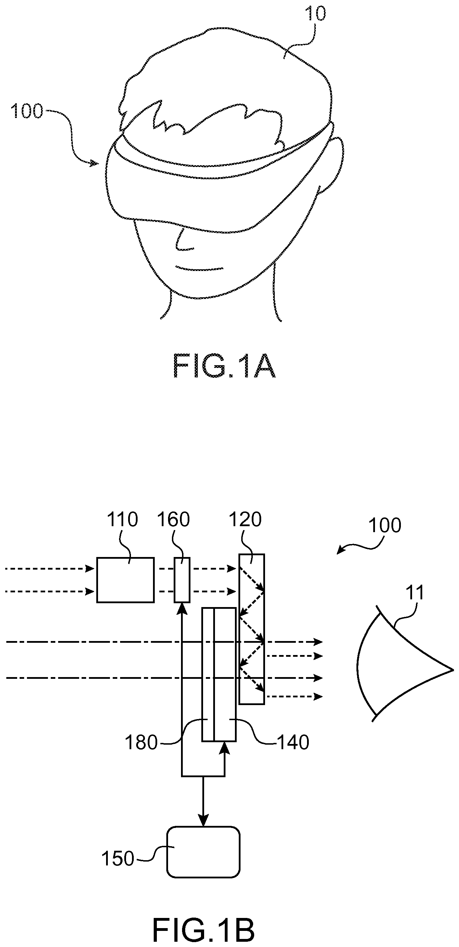

La figure 1A illustre, de manière schématique, un appareil de vision 100 selon l'invention monté sur la tête d'un utilisateur 10. L'appareil de vision 100 forme un dispositif portatif, apte à être monté sur la tête de l'utilisateur 10 en recouvrant au moins une partie de son visage à hauteur des yeux. L'appareil de vision 100 se présente par exemple sous la forme de lunettes, d'un masque ou d'un casque intégrant les éléments de l'appareil de vision 100. En utilisation, l'appareil de vision 100 est fixe relativement à la tête de l'utilisateur 10.

Sur les figures suivantes, on a représenté l'œil de l'utilisateur, afin de faciliter la compréhension de l'invention. Il est bien entendu que l'œil ne fait pas partie de l'appareil de vision selon l'invention.

La figure 1B illustre de façon schématique l'appareil de vision 100 selon un premier mode de réalisation de l'invention. L'appareil de vision 100 comprend ici : un dispositif de vision nocturne 110, un élément de déport 120, un obturateur 140, un élément de commutation 160, et un dispositif de pilotage 150.

Le dispositif de vision nocturne 110 désigne un dispositif d'imagerie pour améliorer la vision de nuit, dans des conditions de faible éclairement. Un tel dispositif utilise de préférence une technologie basée sur l'intensification de lumière, la détection thermique, la détection bas niveau de lumière (notamment à l'aide de capteurs CMOS), ou une combinaison de ces technologies. Il est configuré pour acquérir une image intensifiée et/ou infrarouge d'une scène environnante. Une image intensifiée désigne ici une image formée en amplifiant un flux lumineux incident, ou formée à l'aide d'un capteur à haute sensibilité.

Le dispositif de vision nocturne 110 peut comprendre un tube intensificateur d'images, muni d'une photocathode, d'un moyen de multiplication d'électrons et d'un écran phosphore. En fonctionnement, la photocathode convertit un flux incident de photons en un flux d'électrons. Ce flux d'électrons est accéléré et se propage jusqu'au moyen de multiplication, au niveau duquel l'énergie de chaque électron incident accéléré provoque l'émission de plusieurs électrons secondaires. On génère ainsi un flux intense d'électrons. Le flux intense d'électrons est reçu par un écran phosphore, et converti par ce dernier en un flux intense de photons. Ce flux intense de photons correspond au flux de photons incident sur la photocathode, mais en plus intense. Le dispositif de vision nocturne 110 fournit ainsi une image intensifiée de la scène environnante, qui est projetée en sortie du tube intensificateur.

En variante, le dispositif de vision nocturne 110 peut comprendre une matrice de capteurs ultra-sensibles dans le visible et/ou sensibles dans l'infrarouge, pour acquérir une image qui est ensuite affichée sur un écran d'affichage. Ladite matrice de capteurs peut comprendre des capteurs CMOS ou CCD bas niveau de lumière, et/ou des capteurs CMOS ou CCD bombardés en électrons, et/ou des capteurs CMOS ou CCD intensifiés, et/ou des photodiodes sensibles dans l'infrarouge, etc. Les bandes infrarouges concernées sont notamment le SWIR (infrarouge court, correspondant à des longueurs d'onde allant de 1,4 µm à 3 µm), le MWIR (infrarouge moyen, correspondant à des longueurs d'onde allant de 3 µm à 8 µm) et/ou le LWIR (infrarouge lointain, correspondant à des longueurs d'onde allant de 8 µm à 15 µm), voire même le proche infrarouge (correspondant à des longueurs d'onde allant de 0,75 µm à 1,4 µm). Le dispositif de vision nocturne 110 fournit ainsi une image intensifiée et/ou infrarouge de la scène environnante, qui est affichée sur l'écran d'affichage.

L'image fournie en sortie du dispositif de vision nocturne 110 est nommée «première image virtuelle ». Cette image est formée par un rayonnement lumineux appartenant au spectre visible (entre 400 nm et 700 nm). En d'autres termes, le dispositif de vision nocturne 110 capte à des longueurs d'onde pouvant appartenir à l'infrarouge, mais restitue une image dans le spectre visible.

L'élément de déport 120 s'étend entre la sortie du dispositif de vision nocturne 110, et une région située, en utilisation, en face d'un oeil 11 de l'utilisateur. En utilisation, au moins une partie de l'élément de déport 120 s'étend devant l'œil 11 de l'utilisateur. L'élément de déport 120 est configuré pour projeter, dans le champ de vision de l'utilisateur, les premières images virtuelles fournies en sortie du dispositif de vision nocturne 110. L'élément de déport est au moins partiellement transparent dans le spectre visible, pour éviter de perturber la vision directe de la scène environnante. Il présente un taux de transmission dans le visible supérieur ou égal à 10%, voire supérieur ou égal à 30%.

Ici, l'élément de déport 120 comprend un guide d'onde planaire, configuré pour recevoir en entrée les premières images virtuelles fournies par le dispositif de vision nocturne 110, pour guider ces images jusqu'à une zone d'extraction, située en utilisation en face de l'œil 11 de l'utilisateur, et pour projeter ces images vers l'œil 11 de l'utilisateur. Deux éléments holographiques sont avantageusement formés sur le guide d'onde planaire, l'un pour jouer un rôle de déviation d'un rayonnement incident collimaté, au niveau du dispositif de vision nocturne 110, l'autre pour diffracter la lumière vers l'œil de l'utilisateur, au niveau de la zone d'extraction.

Selon une variante non représentée, l'élément de déport 120 peut comporter un prisme, notamment un verre épais qui s'étend au moins partiellement devant l'œil 11, en utilisation.

Sur la figure 1B, on a représenté en traits pointillés le rayonnement lumineux provenant de la scène environnante et se propageant jusqu'au dispositif de vision nocturne 110, ainsi que le rayonnement lumineux fourni en sortie du dispositif de vision nocturne et se propageant jusqu'à l'œil de l'utilisateur en passant par l'élément de déport 120.

L'obturateur 140 est configuré pour s'étendre, en utilisation, en face de l'œil 11 de l'utilisateur, du côté de l'élément de déport 120 opposé à l'œil 111. L'élément de déport 120 se trouve alors entre l'obturateur 140 et l'œil 11. L'obturateur ne présente pas nécessairement la même étendue que l'élément de déport 120. En particulier, l'obturateur 140 s'étend ici au regard d'une partie seulement de l'élément de déport, située en utilisation en face de l'œil de l'utilisateur. Selon une variante non représentée, l'obturateur peut dépasser latéralement relativement à l'élément de déport, notamment pour bloquer au mieux des rayons lumineux réfléchis sur l'œil de l'utilisateur et/ou sur sa peau, dans une zone du visage entourant l'œil.

Ici, l'appareil de vision est muni d'un écran 180 au moins partiellement transparent dans le visible, de type verre de lunette, ou écran de masque, ou visière de casque. En utilisation, l'élément de déport 120 s'étend entre l'écran 180 et l'œil de l'utilisateur. Ici, l'obturateur 140 est accolé contre l'écran 180, et s'étend selon tout ou partie de la surface de ce dernier. L'obturateur 140 s'étend ici contre l'écran 180, du même côté de l'écran que l'élément de déport 120. Selon une variante non représentée, l'obturateur 140 s'étend contre l'écran 180, du côté de l'écran opposé à l'élément de déport 120. Selon une autre variante non représentée, il n'y a pas d'écran distinct de l'élément de déport. L'obturateur 140 peut alors être accolé contre l'élément de déport 120, du côté opposé à l'œil de l'utilisateur. Dans tous les cas, l'obturateur 140 peut s'étendre selon une surface non plane, par exemple pour suivre la courbure de l'écran 180.

L'obturateur 140 est apte à prendre deux positions parmi une position ouverte, dans laquelle il présente un premier taux de transmission, et une position fermée, dans laquelle il présente un second taux de transmission inférieur au premier taux de transmission. De préférence, le premier taux de transmission, ou taux bas, est inférieur à 1%, dans le visible, et le second taux de transmission, ou taux élevé, est supérieur à 30%, dans le visible. En tout état de cause, le second taux de transmission doit être le plus élevé possible, mais un taux de l'ordre de 30% ne perturbera pas l'utilisateur, lui donnant simplement l'impression de voir à travers des lunettes légèrement teintées. Pour simplifier, on considère dans la suite qu'en position fermée, l'obturateur bloque la lumière, et en position ouverte l'obturateur laisse passer la lumière.

L'obturateur 140 peut être de type matriciel, formé par exemple d'un écran à cristaux liquides. En variante, l'obturateur peut être de type électro-chromique, apte à changer de couleur et de taux de transmission en réponse à l'application d'une charge électrique, par un phénomène d'oxydo-réduction. Le phénomène est réversible. L'obturateur peut reprendre son taux de transmission initial automatiquement, après un intervalle de temps prédéterminé, ou en réponse à l'application d'une très faible charge électrique. Il peut ainsi alterner rapidement entre ces deux positions, tout en présentant une faible consommation énergétique.

Dans sa position fermée, l'obturateur 140 bloque le passage de la lumière, dans les deux sens. Ainsi, la lumière provenant de la scène environnante ne parvient pas jusqu'à l'œil de l'utilisateur, de sorte que l'utilisateur ne voit pas directement la scène environnante. En outre, l'obturateur 140 empêche qu'un rayonnement lumineux transitant par l'élément de déport 120 et/ou réfléchi sur l'œil de l'utilisateur et/ou réfléchi sur la peau de l'utilisateur dans une zone du visage proche de l'œil, puisse être vu par un observateur tiers, en particulier un rayonnement lumineux provenant du dispositif de vision nocturne 110. Dans cette position, l'utilisateur n'a pas de vision directe de la scène environnante, mais il est également peu visible pour un observateur tiers.

Dans sa position ouverte, l'obturateur 140 autorise le passage de la lumière, dans les deux sens. Dans cette position, la lumière provenant de la scène environnante parvient jusqu'à l'œil de l'utilisateur qui peut ainsi observer directement ladite scène. En outre, un rayonnement lumineux transitant par l'élément de déport 120 et/ou réfléchi sur l'œil de l'utilisateur et/ou réfléchi sur la peau de l'utilisateur dans une zone du visage proche de l'œil peut être vu par un observateur tiers, en particulier un rayonnement lumineux provenant du dispositif de vision nocturne 110. Dans cette position, l'utilisateur a une vision directe de la scène environnante, mais il est également plus visible pour un observateur tiers.

Avantageusement, l'obturateur 140 est apte à alterner rapidement entre ces deux positions, selon des cycles d'une fréquence par exemple supérieure ou égale à 50 Hz, voire supérieure ou égale à 140 Hz (où la durée d'un cycle correspond à la durée entre deux passages successifs en position ouverte). En tout état de cause, l'obturateur 140 est avantageusement apte à alterner entre ces deux positions, de sorte que l'utilisateur ne perçoive pas ces alternances et dispose d'une vision en continu de la scène environnante, du fait de la persistance rétinienne. L'obturateur 140 doit aussi, autant que possible, avoir une masse compatible avec les dispositifs portables sur tête, présenter une faible consommation d'énergie, être compatible avec les conditions courantes d'utilisation (température, pression, chocs, etc.), et offrir un grand taux d'extinction.

L'élément de commutation 160 est disposé en sortie du dispositif de vision nocturne 110, en amont de l'élément de déport 120 dans le sens de circulation de la lumière en sortie du dispositif de vision nocturne 110.

L'élément de commutation 160 est apte à prendre deux positions parmi une position ouverte dans laquelle il autorise l'émission des premières images virtuelles par le dispositif de vision nocturne 110 ou leur transfert depuis le dispositif de vision nocturne 110 vers l'élément de déport 120, et une position formée dans laquelle il bloque ladite émission ou ledit transfert.

L'élément de commutation 160 est formé ici par un écran à cristaux liquides, ou un obturateur de type électro-chromique tel que décrit ci-dessus. Il est configuré pour autoriser ou bloquer, selon le cas, le transfert de l'image virtuelle depuis le dispositif de vision nocturne 110 jusqu'à l'élément de déport 120. On considère que l'élément de commutation 160 bloque ou autorise le passage de la lumière, même lorsqu'en pratique le blocage peut correspondre simplement à un premier taux de transmission et l'autorisation à un second taux de transmission supérieur au premier taux de transmission.

Selon une variante non représentée, l'élément de commutation 160 est configuré pour piloter le fonctionnement ou l'arrêt de l'émission de lumière par le dispositif de vision nocturne 110. Un tube intensificateur d'image peut par exemple être muni d'un tel élément de commutation, permettant que le tube alterne entre une position de fonctionnement (émission de lumière) et une position d'arrêt (pas d'émission de lumière), selon des cycles d'une durée pouvant être inférieure à 1 µs (où la durée d'un cycle correspond à la durée entre deux passages successifs en position de fonctionnement). De la même manière, un écran d'affichage d'un dispositif de vision nocturne peut être muni d'un tel élément de commutation, permettant que l'écran alterne entre une position fonctionnement (émission de lumière) et une position d'arrêt (pas d'émission de lumière).

Dans sa position ouverte, l'élément de commutation 160 autorise le transfert des premières images virtuelles depuis le dispositif de vision nocturne 110 jusqu'à l'élément de déport 120, ou simplement leur émission par le dispositif de vision nocturne 110. Dans cette position, l'utilisateur voit les premières images virtuelles qui sont projetée dans son champ de vision. Le rayonnement lumineux émis par le dispositif de vision nocturne 110 forme cependant des réflexions parasites au sein de l'élément de déport 120 et/ou sur l'œil 11 de l'utilisateur et/ou sur la peau de l'utilisateur dans une zone du visage proche de l'œil.

Dans sa position fermée, l'élément de commutation 160 bloque le transfert des premières images virtuelles depuis le dispositif de vision nocturne 110 jusqu'à l'élément de déport 120, ou simplement leur émission par le dispositif de vision nocturne 110. Dans cette position, l'utilisateur ne voit aucune image en provenance du dispositif de vision nocturne. Puisqu'aucun rayonnement en provenance du dispositif de vision nocturne ne parvient jusqu'à l'élément de déport, il n'y a pas de réflexion parasite liée à un tel rayonnement au sein de l'élément de déport 120 et/ou sur l'œil 11 de l'utilisateur et/ou sur la peau de l'utilisateur dans une zone du visage proche de l'œil.

Le dispositif de pilotage 150 comprend de préférence une unité centrale ayant un processeur mettant en oeuvre des programmes enregistrés dans une mémoire. Il est configuré pour piloter la position de l'élément de commutation 160 conjointement avec la position de l'obturateur 140, de sorte l'obturateur 140 soit fermé pendant tout ou partie d'une période durant laquelle l'élément de commutation 160 est ouvert, et que l'obturateur 140 soit ouvert pendant tout ou partie d'une période durant laquelle l'élément de commutation 160 est fermé.

Lorsque l'élément de commutation 160 est ouvert, l'appareil de vision selon l'invention offre une vue en vision nocturne de la scène environnante. Lorsque l'obturateur 140 est ouvert, l'appareil de vision selon l'invention offre une vision directe de la scène environnante, ici en transparence à travers l'élément de déport 120 au moins. L'appareil de vision selon l'invention peut ainsi offrir à la fois une vue en transparence de la scène environnante et une vue en vision nocturne de la même scène. Cependant, afin de garantir une grande discrétion, ces deux vues ne sont pas proposées simultanément, comme c'est le cas dans les appareils de vision en réalité augmentée de l'art antérieur, mais au moins en partie en alternance.

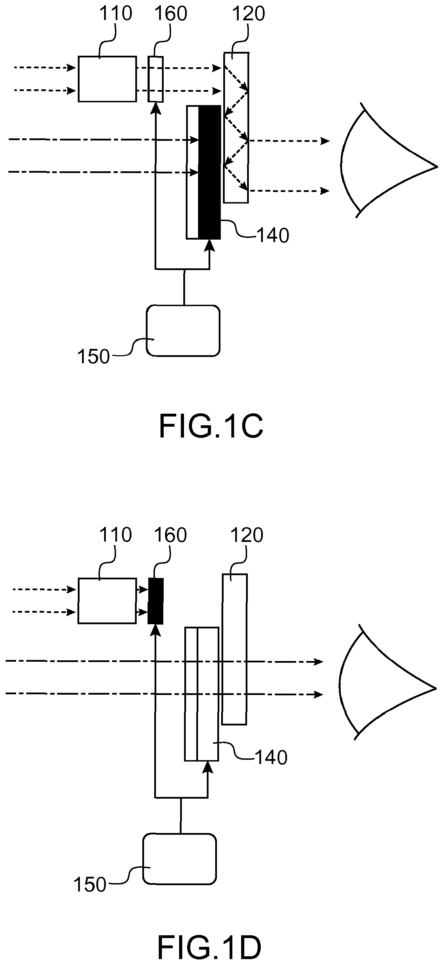

L'appareil de vision selon l'invention peut prendre en particulier deux configurations, illustrées respectivement aux figures 1C et 1D.

A la figure 1C, l'élément de commutation 160 autorise le transfert des premières images virtuelles depuis le dispositif de vision nocturne 110 jusqu'à l'élément de déport 120, et l'obturateur 140 est fermé. Dans cette position, l'utilisateur a une vue en vision nocturne de la scène environnante (grâce aux premières images virtuelles émises par le dispositif de vision nocturne 110 et projetées dans son champ de vision), mais n'a pas de vue directe de la scène environnante (à cause de la position fermée de l'obturateur 140). Grâce à la position fermée de l'obturateur 140, des réflexions parasites formées par le rayonnement lumineux émis par le dispositif de vision nocturne 110, sont empêchées d'être vues par un observateur tiers.

A la figure 1D, l'élément de commutation 160 est fermé, de manière à empêcher le transfert des premières images virtuelles depuis le dispositif de vision nocturne 110 jusqu'à l'élément de déport 120, et l'obturateur 140 est ouvert. Dans cette position, l'utilisateur a une vue directe de la scène environnante. Dans cette position, il n'a pas de vue en vision nocturne de la scène environnante puisque les premières images virtuelles ne sont pas projetées dans son champ de vision. Dans ce cas, on évite la formation de réflexions parasites susceptibles d'être vues par un observateur tiers en bloquant, au niveau de l'élément de commutation 160, le rayonnement lumineux émis par le dispositif de vision nocturne 110.

Le dispositif de pilotage 150 est configuré pour ouvrir et fermer l'obturateur 140 selon des premiers cycles successifs comportant chacun une période de temps durant laquelle l'obturateur 140 est ouvert et une période de temps durant laquelle l'obturateur est fermé. En négligeant les temps de commutation, chaque cycle est constitué par chacune de ces deux périodes. A chaque cycle, l'obturateur 140 va successivement empêcher et autoriser une vision directe de la scène environnante. De préférence, chaque cycle dure moins de 50 ms, plus préférentiellement moins de 5 ms, par exemple environ 1 ms. Du fait de la persistance rétinienne, l'utilisateur aura ainsi une vision directe et en continu de la scène environnante. Cette vision de la scène environnante est une vision dite naturelle, sans aucune réduction du champ de vision de l'utilisateur. La durée des premiers cycles définit une fréquence d'ouverture et fermeture de l'obturateur. On peut définir un premier rapport cyclique, égal pour chaque premier cycle à la durée pendant laquelle l'obturateur 140 est en position ouverte divisée par la durée totale de ce premier cycle. Avantageusement, ce premier rapport cyclique est variable dans le temps. La valeur du premier rapport cyclique est alors pilotée par le dispositif de pilotage 150, par exemple en fonction d'une consigne reçu via une interface homme-machine, ou en fonction d'une consigne définie à l'aide d'une mesure de luminosité.

De même, le dispositif de pilotage 150 est configuré pour ouvrir et fermer l'élément de commutation 160 selon des seconds cycles successifs comportant chacun une période de temps durant laquelle l'élément de commutation 160 est ouvert et une période de temps durant laquelle l'élément de commutation 160 est fermé. En négligeant les temps de commutation, chaque cycle est constitué par chacune de ces deux périodes. A chaque cycle, l'élément de commutation 160 va successivement empêcher et autoriser une vue en vision nocturne de la scène environnante. De préférence, chaque cycle dure moins de 50 ms, plus préférentiellement moins de 5 ms, par exemple environ 1 ms. Du fait de la persistance rétinienne, l'utilisateur aura ainsi une vue en vision nocturne et en continu de la scène environnante. Cette vue en vision nocturne de la scène environnante est une vision dite naturelle, sans aucune réduction du champ de vision de l'utilisateur. La durée des seconds cycles définit une fréquence d'ouverture et fermeture de l'élément de commutation. On peut définir un second rapport cyclique, égal pour chaque second cycle à la durée pendant laquelle l'élément de commutation est en position ouverte divisée par la durée totale de ce second cycle. Avantageusement, ce second rapport cyclique est variable dans le temps. La valeur du second rapport cyclique est alors pilotée par le dispositif de pilotage 150, par exemple en fonction d'une consigne reçu via une interface homme-machine, ou en fonction d'une consigne définie à l'aide d'une mesure de luminosité.

En outre, à chaque premier cycle et chaque second cycle, l'obturateur 140 est fermé pendant tout ou partie de la période de temps durant laquelle l'élément de commutation 160 est ouvert, et l'obturateur 140 est ouvert pendant tout ou partie de la période de temps durant laquelle l'élément de commutation 160 est fermé. Dit autrement, le dispositif de pilotage 150 est configuré pour piloter ensemble l'élément de commutation 160 et l'obturateur 140, selon des cycles successifs qui comportent chacun une période durant laquelle l'appareil de vision prend la configuration de la figure 1C, et une période durant laquelle l'appareil de vision prend la configuration de la figure 1D.

De préférence, la fréquence des premier et second cycles est suffisamment élevée pour offrir à l'utilisateur une sensation de vision en continu et en simultané de la vue en vision nocturne et de la vue en vision directe de la scène environnante. L'utilisateur peut ainsi bénéficier d'une vision naturelle et en couleurs d'une scène environnante, malgré une luminosité ambiante qui ne le permettrait normalement pas, et conjointement avec une grande discrétion d'utilisation.

De préférence, les premier et seconds cycles sont en opposition de phase totale. En d'autres termes, et en négligeant des temps de commutation, à chaque premier cycle et chaque second cycle, l'obturateur 140 est fermé pendant toute la période durant laquelle l'élément de commutation 160 est ouvert, et l'obturateur 140 est ouvert pendant toute la période durant laquelle l'élément de commutation 160 est fermé. Les premières images virtuelles sont donc projetées en discontinu par l'élément de déport, uniquement lorsque l'obturateur 140 est en position fermée et pendant toute la durée pendant laquelle l'obturateur 140 est en position fermée. Cela permet une discrétion maximale de l'appareil de vision selon l'invention, Un tel mode de fonctionnement est particulièrement avantageux dans des conditions de faible luminosité.

Dans la suite des figures, et pour des raisons de clarté, l'écran de type verre de lunette, écran de masque ou visière de casque n'est pas représenté.

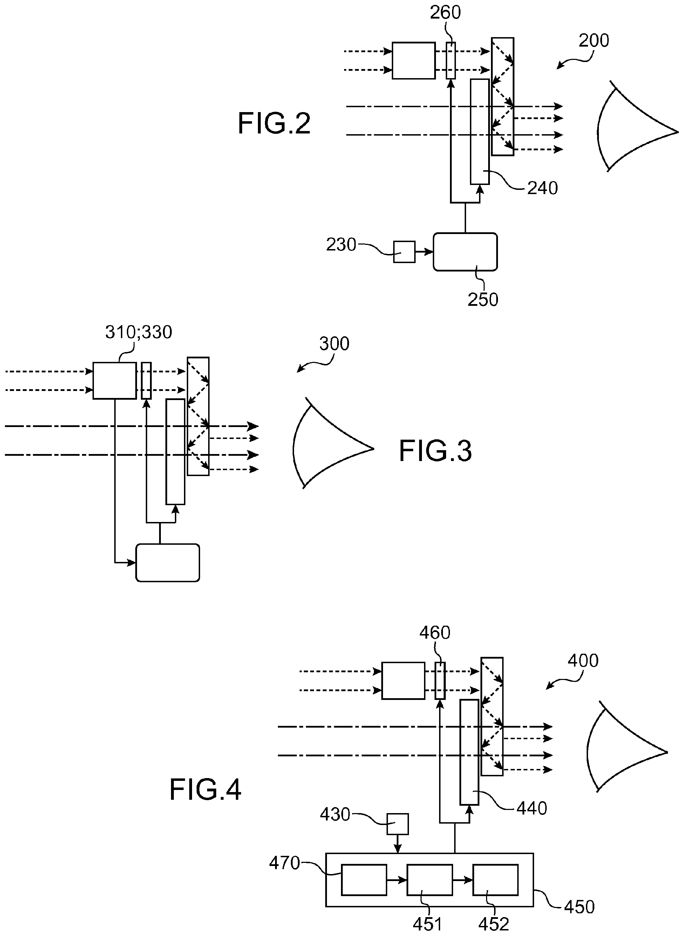

La figure 2 illustre un deuxième mode de réalisation d'un appareil de vision 200 selon l'invention, qui ne diffère du dispositif des figures 1B à 1D qu'en ce qu'il comporte en outre un élément de mesure de luminosité 230.

L'élément de mesure de luminosité 230 permet de réaliser une mesure relative à une luminosité ambiante de la scène environnante, dans le spectre visible. Il est configuré pour acquérir par exemple une mesure d'intensité lumineuse, ou d'éclairement lumineux. Il peut être formé par une simple photodiode sensible dans le visible, ou être formé par le dispositif de vision nocturne lui-même (voir figure 3).

L'élément de mesure de luminosité 230 est relié au dispositif de pilotage 250, pour lui fournir une mesure de luminosité ambiante.

Le dispositif de pilotage 250 est configuré pour recevoir en entrée ladite mesure de luminosité ambiante, pour déterminer en réponse une consigne de pilotage qui dépend de ladite mesure de luminosité, et pour piloter l'ouverture ou la fermeture de l'obturateur 240 et de l'élément de commutation 260 à l'aide de ladite consigne de pilotage.

De manière avantageuse, le dispositif de pilotage 250 est apte à piloter des premiers cycles d'ouverture et fermeture de l'obturateur 240 et des seconds cycles d'ouverture et fermeture de l'élément de commutation 260 tels que décrits ci-dessus, et de sorte que chaque premier cycle présente un rapport cyclique qui augmente lorsque la valeur de la mesure de luminosité augmente, ledit rapport cyclique étant égal à la durée pendant laquelle l'obturateur 240 est en position ouverte durant ce cycle divisée par la durée totale dudit cycle.

Un tel pilotage de l'obturateur 240 permet de bloquer d'autant plus de lumière en provenance de la scène environnante que la luminosité ambiante est forte. On peut ainsi égaliser une quantité moyenne de lumière arrivant à l'utilisateur en provenance directe de la scène environnante, et une quantité moyenne de lumière arrivant à l'utilisateur en provenance du dispositif de vision nocturne. On garantit ainsi un rendu optimum de la vue en vision nocturne comme de la vue en vision directe. Ce pilotage permet également de bloquer d'autant plus les réflexions parasites liées à la lumière en provenance du dispositif de vision nocturne 210, que la luminosité ambiante est faible. On garantit ainsi une grande discrétion de l'appareil de vision 200, puisque la visibilité de ces réflexions parasites est fonction du contraste lumineux de ces dernières avec la scène environnante.

De préférence, les premiers et second cycles sont en opposition de phase totale. Ainsi, plus la luminosité ambiante est élevée, plus on privilégie la vision directe de la scène environnante, et plus la luminosité ambiante est faible, plus on privilégie la vision nocturne de la scène environnante. Les deux situations extrêmes correspondent à des rapports cycliques de 0 ou 1 (obturateur 240 continûment fermée et élément de commutation 260 continument ouvert, ou inversement).

La figure 3 illustre de façon schématique un troisième mode de réalisation d'un appareil de vision 300 selon l'invention, qui ne diffère du mode de réalisation illustré en figure 2 qu'en ce que le dispositif de vision nocturne 310 forme également l'élément de mesure de luminosité 330. Dans ce cas, le dispositif de vision nocturne 310 peut comporter un module de calcul d'une luminosité moyenne sur l'ensemble de la scène environnante, à partir de mesures fournies par chacun des pixels du dispositif de vision nocturne 310. En variante, une partie seulement d'une surface de détection du dispositif de vision nocturne 310 est utilisée pour former l'élément de mesure de luminosité 330.

La figure 4 illustre de façon schématique un quatrième mode de réalisation d'un appareil de vision 400 selon l'invention, qui ne diffère du mode de réalisation illustré en figure 2 qu'en ce que dispositif de pilotage 450 comporte en outre une mémoire 470, stockant une ou plusieurs valeurs seuils de luminosité. Ces une ou plusieurs valeurs seuils définissent ensemble au moins deux intervalles de valeurs de luminosité.

Le dispositif de pilotage 450 comporte également un comparateur 451, relié en entrée à la mémoire 470 et à l'élément de mesure de luminosité 430, et un module de traitement 452, relié à la sortie du comparateur 451.

Le comparateur 451 est configuré pour comparer une mesure de luminosité fournie par l'élément de mesure de luminosité 430 avec une ou plusieurs valeurs seuils stockées dans la mémoire 470, et pour en déduire un intervalle de valeurs de luminosité auquel appartient la mesure de luminosité. Cet intervalle est fourni au module de traitement 452.

Le module de traitement 452 est configuré pour associer chaque intervalle à un mode de fonctionnement prédéterminé de l'appareil de vision, et pour générer ensuite une commande de pilotage selon ledit mode de fonctionnement. Ladite commande de pilotage est fournie à l'obturateur 440 et à l'élément de commutation 460.

On peut définir par exemple les trois modes de fonctionnement ci-dessous :
- Lorsque la luminosité ambiante est élevée, supérieure à un premier seuil prédéterminé, l'obturateur 240 est continument en position ouverte et l'élément de commutation 260 continument en position fermée ;
- Lorsque la luminosité ambiante est faible, inférieure à un second seuil prédéterminé lui-même inférieur au premier seuil, l'obturateur 240 est continument en position fermée et l'élément de commutation 260 continûment en position ouverte ;
- Lorsque la luminosité ambiante est comprise entre ces deux seuils, l'obturateur 240 et l'élément de commutation 260 sont chacun alternativement en position ouverte et fermée, selon des cycles successifs tels que décrits ci-dessus, en opposition de phase totale ou partielle.

Ainsi, lorsque la luminosité ambiante ne justifie pas d'utiliser la vision nocturne, seule la vision directe de la scène est offerte à l'utilisateur. A l'inverse, lorsque la luminosité ambiante est très faible, seule la vision nocturne de la scène est offerte à l'utilisateur. Entre les deux, les deux visions sont combinées comme décrit ci-dessus.

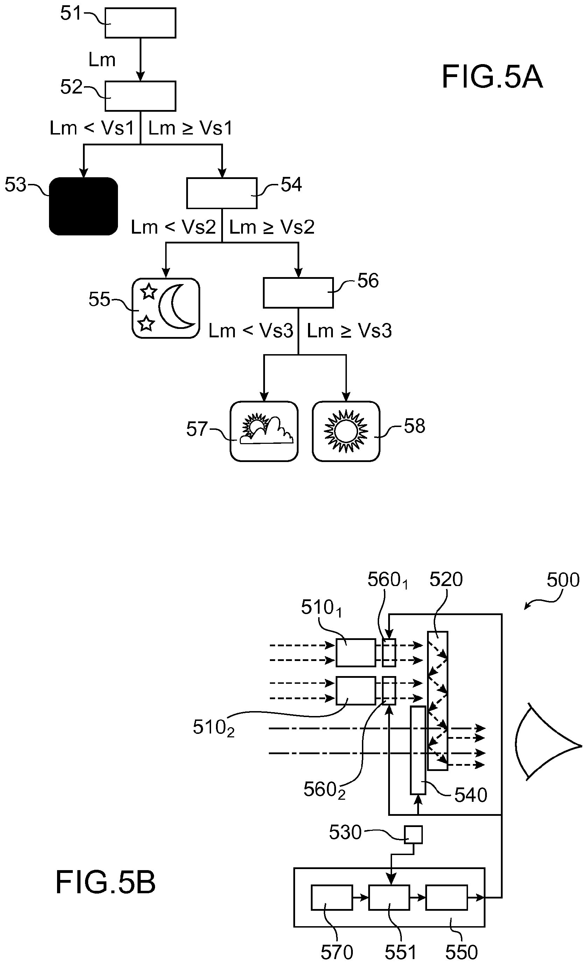

On décrit enfin, en référence aux figures 5A et 5B, un cinquième mode de réalisation d'un appareil de vision 500 selon l'invention, et un exemple particulièrement complet de procédé mis en oeuvre dans cet appareil de vision.

L'appareil de vision 500 comporte un dispositif de vision nocturne 510₁ tel que décrit ci-dessus, et un dispositif de vision en réalité augmentée 510₂.

Le dispositif de vision en réalité augmentée 510₂ est par exemple relié à des capteurs annexes, non représentés, et configuré pour générer et émettre des secondes images virtuelles comportant des indicateurs visuels représentatifs de mesures fournies par ces capteurs annexes. Il peut s'agir d'indicateurs de position, d'altitude, de vitesse, de cap, etc. Un tel dispositif peut également comporter au moins une caméra, relié à un moyen de traitement d'image pour identifier des objets d'intérêt sur des images acquises par l'au moins une caméra et générer en réponse des secondes images virtuelles dans laquelle ces objets d'intérêt sont mis en évidence. L'au moins une caméra peut comprendre une caméra thermique, une caméra de vision nocturne, et/ou une caméra sensible dans le visible, etc. Le dispositif peut comporter deux caméras, par exemple une caméra thermique et une caméra sensible dans le visible, et un module de traitement pour fusionner les images acquises par chacune de ces deux caméras.

L'élément de déport 520 est apte à projeter en outre les secondes images virtuelles, dans le champ de vision de l'utilisateur.

Deux éléments de commutation 560₁, 560₂ sont disposés respectivement en sortie du dispositif de vision nocturne 510₁ et en sortie du dispositif de vision en réalité augmentée 510₂. Chacun de ces éléments de commutation est tel que celui décrit ci-avant. En particulier, chacun de ces éléments de commutation 560₁, 560₂ peut être formé par un élément matériel de type écran à cristaux liquides, ou par un module de traitement de signal configuré pour piloter directement des instants d'émission d'une image virtuelle par le dispositif de vision nocturne 510₁, respectivement le dispositif de vision en réalité augmentée 510₂.

Le dispositif de pilotage 550 est similaire à celui de la figure 4, excepté qu'il pilote également l'ouverture et la fermeture de l'élément de commutation 560₂, associé au dispositif de vision en réalité augmentée 510₂.

La mémoire 570 stocke ici trois valeurs seuils de luminosité Vs1, Vs2, Vs3, où Vs1 est strictement inférieure à Vs2 et Vs2 est strictement inférieure à Vs3. Ces trois valeurs définissent ensemble quatre intervalles de valeurs de luminosité :
- un intervalle de valeurs de luminosité ultra basses, dans lequel la luminosité est comprise entre la valeur nulle et Vs1 (Vs1 exclue),
- un intervalle de valeurs de luminosité basses, dans lequel la luminosité est comprise entre Vs1 et Vs2 (Vs2 exclue),
- un intervalle de valeurs de luminosité hautes, dans lequel la luminosité est comprise entre Vs2 et Vs3 (Vs3 exclue), et
- un intervalle de valeurs de luminosité très hautes, dans lequel la luminosité est supérieure ou égale à Vs3.

On a par exemple :
- Vs1 = 700 plux, l'intervalle de valeurs de luminosité ultra basses correspondant alors au niveau de nuit 5 ; et
- Vs2 = 15 mlux, l'intervalle de valeurs de luminosité basses correspondant alors aux niveaux de nuit 3 et 4.

Dans une première étape 51, l'élément de mesure de luminosité 530 acquiert une mesure de luminosité ambiante, et envoie cette mesure Lm au comparateur 551 du dispositif de pilotage.

A l'étape 52, le comparateur 551 compare la mesure Lm avec la plus petite valeur seuil Vs1.

Si Lm est strictement inférieure à Vs1, le comparateur en déduit que la valeur Lm est située dans l'intervalle de valeurs de luminosité ultra basses. Dans le mode de fonctionnement associé, le dispositif de pilotage 550 pilote l'obturateur 540 et les éléments de commutation 560₁, 560₂ de manière à maintenir l'obturateur 540 constamment en position fermée et les éléments de commutation 560₁, 560₂ constamment en position ouverte (étape 53). On assure ainsi une grande discrétion de l'appareil de vision selon l'invention. L'absence de vision directe de la scène environnante n'est pas préjudiciable, puisque cette scène est trop peu éclairée pour offrir à l'utilisateur une vision directe satisfaisante. Le cas échéant, on peut adapter des paramètres de contraste et/ou de luminosité en sortie de chacun des dispositifs d'imagerie 510₁, 510₂, pour offrir le meilleur confort visuel à l'utilisateur. En variante, l'élément de commutation 560₂ en sortie du dispositif de vision en réalité augmentée 510₂ peut être maintenu en position fermée.

Si Lm est supérieure ou égale à Vs1, le comparateur compare, dans une étape 54, la valeur de luminosité Lm avec la valeur seuil Vs2.

Si Lm est strictement inférieure à Vs2, le comparateur en déduit que la valeur Lm est située dans l'intervalle de valeurs de luminosité basses. Dans le mode de fonctionnement associé, le dispositif de pilotage 550 pilote l'obturateur 540 et l'élément de commutation 560₁, selon des cycles successifs d'ouverture et de fermeture tels que décrits ci-avant, de préférence en opposition de phase totale. De préférence, le dispositif de pilotage 550 pilote l'élément de commutation 560₂ de la même manière que l'élément de commutation 560₁. Comme expliqué ci-avant, on assure ainsi une grande discrétion de l'appareil de vision selon l'invention tout en offrant à l'utilisateur une vision directe de la scène environnante, en plus de la vision des images virtuelle.

Si Lm est supérieure ou égale à Vs2, le comparateur compare, dans une étape 56, la valeur de luminosité Lm avec la valeur seuil Vs3.

Si Lm est strictement inférieure à Vs3, le comparateur en déduit que la valeur Lm est située dans l'intervalle de valeurs de luminosité hautes. Dans le mode de fonctionnement associé, le dispositif de pilotage 550 pilote l'obturateur 540 de manière à le maintenir constamment en position ouverte (étape 57). De préférence, il pilote l'élément de commutation 560₁ associé au dispositif de vision nocturne, de manière à le maintenir constamment en position fermée. En effet, dans ces conditions de luminosité, la vision nocturne ne présente pas d'intérêt pour l'utilisateur. De préférence, il pilote l'élément de commutation 560₂ associé au dispositif de vision en réalité augmentée, de manière à le maintenir constamment en position ouverte. On offre ainsi une vision directe de la scène environnante, enrichie par des informations provenant de capteurs annexes, selon le principe de la vision en réalité augmentée. Le cas échéant, on peut adapter des paramètres de contraste et/ou d'intensité lumineuse de l'image virtuelle fournie par le dispositif de vision en réalité augmentée, pour offrir le meilleur confort visuel à l'utilisateur.

Si Lm est supérieure ou égale à Vs3, le comparateur en déduit que la valeur Lm est située dans l'intervalle de valeurs de luminosité très hautes. Dans le mode de fonctionnement associé, le dispositif de pilotage 550 pilote l'ouverture et la fermeture de l'obturateur 540 selon des cycles successifs d'ouverture et de fermeture, pour limiter un éblouissement de l'utilisateur par la lumière ambiante (étape 58). De préférence, il pilote l'élément de commutation 560₁ associé au dispositif de vision nocturne, de manière à le maintenir constamment en position fermée. En effet, dans ces conditions de luminosité, la vision nocturne ne présente pas d'intérêt pour l'utilisateur. De préférence, il pilote l'élément de commutation 560₂ associé au dispositif de vision en réalité augmentée, de manière à le maintenir constamment en position ouverte, ou selon des cycles successifs d'ouverture et de fermeture permettant que l'élément de commutation 560₂ se trouve en position ouverte pendant au moins une partie d'un intervalle de temps durant lequel l'obturateur 540 est en position fermée. On améliore ainsi la visibilité de l'image virtuelle projetée à l'utilisateur, en réduisant la quantité de lumière parvenant jusqu'à l'œil de l'utilisateur, lorsque l'image virtuelle est projetée dans son champ de vision.

Avantageusement, le dispositif de pilotage 550 peut basculer sur le mode de fonctionnement associé à l'intervalle de valeurs de luminosité ultra basses, lorsque la charge d'une batterie de l'appareil de vision 500 passe sous un seuil prédéterminé. On limite ainsi au maximum la consommation énergétique de l'appareil de vision 500.

De nombreuses variantes de ce procédé peuvent être mises en oeuvre, selon que l'appareil de vision comporte ou non un dispositif de vision en réalité augmentée, avec ou sans élément de commutation associé.

Selon d'autres variantes encore, le procédé ne comporte pas tous les modes de fonctionnement décrits ci-dessus.

L'invention n'est pas limitée aux exemples décrits ci-dessus, et de nombreuses variantes d'appareils de vision et de procédés associés peuvent être mis en oeuvre, sans sortir du cadre de l'invention.

Par exemple, dans chacun des exemples représentés, le dispositif de vision nocturne et l'obturateur se trouvent d'un même côté de l'élément de déport, du côté opposé à l'œil, en utilisation. En variante, l'élément de déport peut être partiellement réfléchissant, avec l'élément de déport disposé entre le dispositif de vision nocturne et l'obturateur.

Selon d'autres variantes encore, l'appareil de vision selon l'invention ne comporte pas d'écran de type verre de lunette, écran de masque ou visière de casque.

Dans chacun des modes de réalisation dans lesquels le dispositif de pilotage est relié à un élément de mesure de luminosité, le dispositif de pilotage peut être muni d'un commutateur, pour basculer d'un pilotage automatique en fonction d'une mesure de luminosité fournie par l'élément de mesure de luminosité, à un pilotage manuel en fonction d'une consigne fournie par un utilisateur via une interface homme-machine. Selon d'autres variantes encore, le dispositif de pilotage n'est pas relié à un élément de mesure de luminosité, et comporte une interface homme-machine pour un pilotage manuel uniquement, en particulier un pilotage d'une variation de rapport cyclique associé à des cycles d'ouverture et fermeture de l'obturateur et/ou à des cycles d'ouverture et fermeture de l'élément de commutation.

L'appareil de vision peut comporter un ou deux ensembles, comportant chacun un dispositif de vision nocturne, un élément de déport, un obturateur, et un élément de commutation, et affectés chacun à l'un des deux yeux de l'utilisateur. Des cycles respectifs d'ouverture et fermeture de l'obturateur et de l'élément de commutation peuvent être décalés dans le temps, pour chacun des deux ensembles. Cela permet de réduire des artefacts de mouvements ou autres inconvénients susceptibles de nuire au confort de l'utilisateur. Le cas échéant, les obturateurs associés chacun à l'un des deux yeux peuvent être formés ensemble d'un seul tenant. De même, les éléments de commutation associés chacun à l'un des deux yeux peuvent être formés ensemble d'un seul tenant. Selon d'autres variantes encore, un unique ensemble comprenant un dispositif de vision nocturne, un élément de déport, un obturateur, et un élément de commutation, peut être affecté aux deux yeux de l'utilisateur.

On peut adapter une intensité lumineuse en sortie du dispositif de vision nocturne selon l'invention en fonction d'un rapport cyclique de l'élément de commutation correspondant, pour compenser une perte de luminosité liée à l'extinction partielle de la sortie du dispositif de vision nocturne. On peut également adapter une intensité lumineuse en sortie du dispositif de vision nocturne en fonction d'une luminosité ambiante, pour améliorer la visibilité des images virtuelles projetées à l'utilisateur. On peut notamment ajuster un gain d'un tube intensificateur, ou une luminosité d'un écran d'affichage.

Le cas échéant, l'obturateur peut être segmenté spatialement en plusieurs zones, pour bloquer localement la lumière en fonction d'une répartition spatiale de luminosité fournie par exemple par le dispositif de vision nocturne. On peut ainsi filtrer les sources de lumière intense gênante ou fatigante de l'environnement présente dans le champ de vision pouvant interférer avec les images virtuelle.

Lorsque l'appareil de vision selon l'invention comporte à la fois un dispositif de vision nocturne et un dispositif de vision en réalité augmentée, associés au même oeil de l'utilisateur, ces deux dispositifs sont avantageusement associés à un même élément de déport. Pour autant, on pourrait avoir un élément de déport respectif pour chacun d'eux. Un élément de commutation respectif peut être affecté à chacun de ces deux dispositifs. En variante, un même élément de commutation est associé à ces deux dispositifs. De préférence, un même obturateur est affecté à chacun des deux dispositifs.

## Revendications

1. Appareil de vision (100 ; 200 ; 300 ; 400 ; 500) destiné à être monté sur la tête d'un utilisateur (100), comprenant :
- un dispositif de vision nocturne (110 ; 310 ; 510₁), configuré pour former des images intensifiées et/ou infrarouges d'une scène environnante, nommées premières images virtuelles ; et
- un élément de déport (120; 520), au moins partiellement transparent, et configuré pour, en utilisation, être positionné devant un oeil de l'utilisateur et projeter lesdites premières images virtuelles dans le champ de vision de l'utilisateur ;
- un obturateur (140 ; 240 ; 440 ; 540) pour laisser passer plus ou moins de lumière entre la scène environnante et l'œil de l'utilisateur, positionné de sorte qu'en utilisation l'élément de déport se trouve entre l'obturateur et l'œil de l'utilisateur, et apte à prendre une position ouverte dans laquelle il présente un premier taux de transmission et une position fermée dans laquelle il présente un second taux de transmission, inférieur au premier taux de transmission ;
- un élément de commutation (160 ; 260 ; 460 ; 560₁), apte à prendre une position ouverte dans laquelle il autorise l'émission des premières images virtuelles par le dispositif de vision nocturne ou leur transfert depuis le dispositif de vision nocturne vers l'élément de déport, et une position fermée dans laquelle il bloque ladite émission ou ledit transfert ; et
- un dispositif de pilotage (150 ; 250 ; 450 ; 550), configuré pour piloter l'ouverture et la fermeture de l'obturateur ainsi que l'ouverture et la fermeture de l'élément de commutation;
**caractérisé en ce que** le dispositif de pilotage (150 ; 250 ; 450 ; 550) présente un mode de fonctionnement dans lequel il est configuré pour :
- piloter des premiers cycles successifs d'ouverture et de fermeture de l'obturateur (140 ; 240 ; 440 ; 540) ; et
- piloter des seconds cycles successifs d'ouverture et de fermeture de l'élément de commutation (160 ; 260 ; 460 ; 560₁) ;
où à chaque premier cycle et chaque second cycle, l'obturateur (140 ; 240 ; 440 ; 540) est fermé pendant tout ou partie de la période de temps durant laquelle l'élément de commutation (160 ; 260 ; 460 ; 560₁) est ouvert, et inversement.

2. Appareil de vision (100 ; 200 ; 300 ; 400 ; 500) selon la revendication 1, **caractérisé en ce que** le dispositif de pilotage (150 ; 250 ; 450 ; 550) présente un mode de fonctionnement dans lequel il est configuré pour piloter l'ouverture et la fermeture de l'obturateur ainsi que l'ouverture et la fermeture de l'élément de commutation de sorte qu'à chaque premier cycle et chaque second cycle l'obturateur (140 ; 240 ; 440 ; 540) soit fermé pendant tout le temps où l'élément de commutation (160 ; 260 ; 460; 560₁) est ouvert, et inversement.

3. Appareil de vision (200 ; 300 ; 400 ; 500) selon la revendication 1 ou 2, **caractérisé en ce qu'**il comporte en outre un élément de mesure de luminosité (230 ; 330 ; 430 ; 530), pour acquérir une mesure de luminosité dans un environnement externe de l'appareil de vision, et **en ce que** le dispositif de pilotage (250 ; 450 ; 550) présente un mode de fonctionnement dans lequel il est configuré pour recevoir en entrée une mesure de luminosité acquise par l'élément de mesure de luminosité, et pour piloter l'ouverture et la fermeture de l'obturateur ainsi que l'ouverture et la fermeture de l'élément de commutation en fonction de ladite mesure de luminosité.

4. Appareil de vision (200 ; 300 ; 400 ; 500) selon la revendication 3, **caractérisé en ce que** le dispositif de pilotage (250 ; 450 ; 550) présente un mode de fonctionnement dans lequel il est configuré pour :
- piloter des premiers cycles successifs d'ouverture et de fermeture de l'obturateur (240 ; 440 ; 540) ; et
- piloter des seconds cycles successifs d'ouverture et de fermeture de l'élément de commutation (260 ; 460 ; 560₁) ;
où à chaque premier cycle et chaque second cycle, l'obturateur (240 ; 440 ; 540) est fermé pendant tout ou partie de la période de temps durant laquelle l'élément de commutation (260 ; 460 ; 560₁) est ouvert, et inversement ;
et où chaque premier cycle présente un rapport cyclique qui augmente lorsque la valeur de la mesure de luminosité augmente, ledit rapport cyclique étant égal à la durée pendant laquelle l'obturateur (240 ; 440 ; 540) est en position ouverte durant ce cycle divisée par la durée totale dudit cycle.

5. Appareil de vision (400 ; 500) selon la revendication 3 ou 4, **caractérisé en ce que** le dispositif de pilotage comprend en outre :
- une mémoire (470 ; 670), stockant une pluralité de valeurs de seuil ; et
- un comparateur (451; 551), configuré pour comparer la mesure de luminosité avec l'une au moins parmi lesdites valeurs de seuil ;
et **en ce que** le dispositif de pilotage (450 ; 550) est configuré pour fonctionner selon l'un parmi une pluralité de modes de fonctionnement prédéterminés, en fonction d'au moins un résultat de comparaison fourni par le comparateur (451; 551), avec les modes de fonctionnement qui diffèrent par des règles correspondantes de pilotage de l'obturateur (440 ; 540) et de l'élément de commutation (460 ; 560₁).

6. Appareil de vision (200 ; 400 ; 500) selon l'une quelconque des revendications 3 à 5, **caractérisé en ce que** l'élément de mesure de luminosité (230 ; 430 ; 530) comprend un capteur de lumière distinct du dispositif de vision nocturne (210 ; 410 ; 510₁).

7. Appareil de vision (300) selon l'une quelconque des revendications 3 à 5, **caractérisé en ce que** l'élément de mesure de luminosité (330) est formé par une partie au moins du dispositif de vision nocturne (310).

8. Appareil de vision (500) selon l'une quelconque des revendications 1 à 7, **caractérisé en ce que** qu'il comprend en outre un dispositif de vision en réalité augmentée (510₂) configuré pour générer des images nommées secondes images virtuelles, et **en ce que** l'élément de déport (520) est configuré pour projeter en outre lesdites secondes images virtuelles dans le champ de vision de l'utilisateur.

9. Procédé mis en oeuvre dans un appareil de vision (100 ; 200 ; 300 ; 400 ; 500) selon l'une quelconque des revendications 1 à 8, **caractérisé en ce qu'**il comprend les étapes suivantes :
- ouvertures et fermetures de l'obturateur (140 ; 240 ; 440 ; 540), pilotées par le dispositif de pilotage, et selon des premiers cycles successifs d'ouverture et de fermeture de l'obturateur; et
- ouvertures et fermetures de l'élément de commutation (160 ; 260 ; 460 ; 560₁), pilotées par le dispositif de pilotage, et selon des seconds cycles successifs d'ouverture et de fermeture de l'élément de commutation ;
où à chaque premier cycle et chaque second cycle, l'obturateur (140 ; 240 ; 440 ; 540) est fermé pendant tout ou partie de la période de temps durant laquelle l'élément de commutation (160 ; 260 ; 460 ; 560₁) est ouvert, et inversement.

10. Procédé selon la revendication 9, **caractérisé en ce que** lesdites étapes d'ouvertures et fermetures de l'obturateur (240 ; 440 ; 640), et d'ouverture et fermetures de l'élément de commutation (260 ; 360 ; 460 ; 610₁, 660₂), sont mises en oeuvre de sorte que l'obturateur (140 ; 240 ; 440 ; 540) soit en position fermée pendant tout le temps où l'élément de commutation (160 ; 260 ; 460 ; 560₁) est en position ouverte, et inversement.

11. Procédé selon la revendication 9 ou 10, **caractérisé en ce qu'**il est mis en oeuvre dans un appareil de vision (200 ; 300 ; 400 ; 500) qui comporte en outre un élément de mesure de luminosité (230; 330 ; 430 ; 530), et **en ce qu'**il comprend les étapes suivantes :
- acquisition, par l'élément de mesure de luminosité (230 ; 330 ; 430 ; 530), d'une mesure de luminosité dans un environnement externe de l'appareil de vision ;
- réception de ladite mesure de luminosité par le dispositif de pilotage (250 ; 450 ; 550) ; et
- ouverture ou fermeture de l'obturateur (240 ; 440 ; 540), et ouverture ou fermeture de l'élément de commutation (260 ; 460 ; 560₁), pilotées par le dispositif de pilotage en fonction de ladite mesure de luminosité.

12. Procédé selon la revendication 11, **caractérisé en ce qu'**il comprend les étapes suivantes :
- ouvertures et fermetures de l'obturateur (240 ; 440 ; 540), pilotées par le dispositif de pilotage, et selon des premiers cycles successifs d'ouverture et de fermeture de l'obturateur; et
- ouvertures et fermetures de l'élément de commutation (260 ; 460 ; 510₁), pilotées par le dispositif de pilotage, et selon des seconds cycles successifs d'ouverture et de fermeture de l'élément de commutation ;
où à chaque premier cycle et chaque second cycle, l'obturateur (240 ; 440 ; 540) est fermé pendant tout ou partie de la période de temps durant laquelle l'élément de commutation (260 ; 460 ; 560₁) est ouvert, et inversement ;
et où chaque premier cycle présente un rapport cyclique qui augmente lorsque la valeur de la mesure de luminosité augmente, ledit rapport cyclique étant égal à la durée pendant laquelle l'obturateur (240 ; 440 ; 540) est en position ouverte durant ce cycle divisée par la durée totale dudit cycle.

13. Procédé selon la revendication 11 ou 12, **caractérisé en ce qu'**il comporte les étapes suivantes :
- comparaison de la mesure de luminosité (Lm) acquise par l'élément de mesure de luminosité (430 ; 530) avec une valeur de seuil dite ultra basse (Vs1) ;
- lorsque ladite mesure de luminosité (Lm) est inférieure à la valeur de seuil ultra basse (Vs1), maintien de l'obturateur (440 ; 540) en position fermée et maintien de l'élément de commutation (560₁) en position ouverte, pilotés par le dispositif de pilotage (450 ; 550).

## Patentansprüche

1. Sichtgerät (100; 200; 300; 400; 500) zur Befestigung auf dem Kopf eines Benutzers (100), umfassend:
- ein Nachtsichtgerät (110; 310; 510₁), konfiguriert zum Erzeugen verstärkter und/ oder Infrarotbildern der Umgebungsszenerie, erste virtuelle Bilder genannt; und
- ein Ausgleichselement (120; 520), zumindest teilweise transparent, und dazu konfiguriert, bei der Benutzung vor einem Auge des Benutzers positioniert zu werden, zum Projizieren der ersten virtuellen Bilder in das Sichtfeld des Benutzers;
- einen Verschluss (140; 240; 440; 540), um mehr oder weniger Licht zwischen der Umgebungsszenerie und dem Auge des Benutzers durchzulassen, so positioniert, dass das Ausgleichselement sich bei der Benutzung zwischen dem Verschluss und dem Auge des Benutzers befindet, und der eine offene Position mit einer ersten Übertragungsrate und eine geschlossene Position mit einer zweiten Übertragungsrate haben kann, die niedriger ist, als die erste Übertragungsrate;
- ein Schaltelement (160; 260; 460; 510₁), das eine offene Position einnehmen kann, die die Emission der ersten virtuellen Bilder über das Nachtsichtgerät oder deren Übertragung vom Nachtsichtgerät an das Ausgleichselement zulässt, und einer geschlossenen Position, in der die Bildemission oder -übertragung blockiert ist; und
- eine Steuervorrichtung (150; 250; 450; 550), konfiguriert zur Steuerung des Öffnens und Schließens des Verschlusses sowie des Öffnens und Schließens des Schaltelementes; **dadurch gekennzeichnet, dass** die Steuervorrichtung (150; 250; 450; 550) einen Betriebsmodus aufweist, in dem sie konfiguriert ist zur:
- Steuerung der ersten aufeinanderfolgenden Öffnungs- und Schließzyklen des Verschlusses (140; 240; 440; 540); und
- Steuerung der zweiten aufeinanderfolgenden Öffnungs- und Schließzyklen des Schaltelementes (160; 260; 460; 510₁), und
wo bei jedem ersten und jedem zweiten Zyklus der Verschluß (140; 240; 440; 540) während der gesamten oder eines Teils der Zeit geschlossen ist, in der das Schaltelement (160; 260; 460; 510i) offen ist, und umgekehrt.

2. Sichtgerät (100; 200; 300; 400; 500) nach Anspruch 1, **dadurch gekennzeichnet, dass** die Steuervorrichtung (150; 250; 450; 550) einen Betriebsmodus aufweist, in dem sie konfiguriert ist zur Steuerung des Öffnens oder Schließens des Verschlusses, sowie des Öffnens oder Schließens des Schaltelements so dass bei jedem ersten Zyklus und jedem zweiten Zyklus der Verschluß (140; 240; 440; 540) während der gesamten Zeit geschlossen ist, in der das Schaltelement (160; 260; 460; 510₁) offen ist und umgekehrt.

3. Sichtgerät (200; 300; 400; 500) nach Anspruch 1 oder 2, **dadurch gekennzeichnet, dass** es außerdem ein Helligkeitsmessgerät (230; 330; 430; 530) enthält, zur Erfassung einer Helligkeit in einer Umgebung außerhalb des Sichtgerät, und dadurch, dass die Steuervorrichtung (250; 450; 550) einen Betriebsmodus aufweist, in dem sie konfiguriert ist zum Empfang am Eingang einer Helligkeitsmessung, erfasst vom Helligkeitsmessgerät , und zur Steuerung des Öffnens und Schließens des Verschlusses sowie des Öffnens und Schließens des Schaltelementes, in Abhängigkeit von dieser Helligkeitsmessung.

4. Sichtgerät (200; 300; 400; 500) nach Anspruch 3, **dadurch gekennzeichnet, dass** die Steuervorrichtung (250; 450; 550) über einen Betriebsmodus verfügt, in dem sie konfiguriert ist zur:
- Steuerung der ersten aufeinanderfolgenden Öffnungs- und Schließzyklen des Verschlusses (240; 440; 540); und
- Steuerung der zweiten aufeinanderfolgenden Öffnungs- und Schließzyklen des Schaltelementes (260; 460; 560₁), und
wo in jedem ersten Zyklus und jedem zweiten Zyklus der Verschluß (240; 440; 540) während der gesamten oder eines Teils der Zeit geschlossen ist, in der das Schaltelement (260; 460; 560₁) offen ist und umgekehrt;
und wo jeder erste Zyklus ein Tastverhältnis aufweist, das sich erhöht, wenn der Messwert der Helligkeit steigt, dieses Tastverhältnis ist dabei gleich der Dauer, während der der Verschluß (240; 440; 540) sich während dieses Zyklus in der offenen Position befindet, geteilt durch die Gesamtdauer dieses Zyklus.

5. Sichtgerät (400; 500) nach Anspruch 3 oder 4, **dadurch gekennzeichnet, dass** die Steuervorrichtung außerdem umfasst:
- einen Speicher (470; 670), in dem mehrere Grenzwerte gespeichert sind; und
- einen Komparator (451; 551), konfiguriert zum Vergleich der Helligkeitsmessung mit mindestens einem dieser Grenzwerte;
und dadurch, dass die Steuervorrichtung (450; 550) dazu konfiguriert ist, nach einem aus einer Vielzahl vorher festgelegter Betriebsmodi zu funktionieren, in Abhängigkeit von mindestens einem Vergleichsergebnis, geliefert vom Komparator (451; 551), wobei die Betriebsmodi sich nach Regeln entsprechend der Steuerung des Verschlusses (440; 540) und des Schaltelementes (460; 560₁) unterscheiden.

6. Sichtgerät (200; 400; 500) nach einem beliebigen der Ansprüche 3 bis 20, **dadurch gekennzeichnet, dass** das Helligkeitsmessgerät (230; 430; 530) einen Lichtsensor enthält, bei dem es sich nicht um das Nachtsichtgerät (210; 410; 510₁) handelt.

7. Sichtgerät (300) nach einem beliebigen der Ansprüche 3 bis 5, **dadurch gekennzeichnet, dass** das Helligkeitsmessgerät (330) zumindest teilweise aus dem Nachtsichtgerät (310) besteht.

8. Sichtgerät (500) nach einem beliebigen der Ansprüche 1 bis 7, **dadurch gekennzeichnet, dass** es außerdem ein AR - Sichtgerät (510₂) enthält, konfiguriert zur Erzeugung sogenannter sekundärer virtueller Bilder und dadurch, dass das Ausgleichselement (520) dazu konfiguriert ist, diese sogenannten sekundären virtuellen Bilder in das Gesichtsfeld des Benutzers zu projizieren.

9. Verfahren, umgesetzt in einem Sichtgerät (100; 200; 300; 400; 500) nach einem beliebigen der Ansprüche 1 bis 8, **dadurch gekennzeichnet, dass** es die folgenden Schritte umfasst:
- Öffnen und Schließen des Verschlusses (140; 240; 440; 540), gesteuert von der Steuervorrichtung, und nach den ersten aufeinanderfolgenden Öffnungs- und Schließzyklen des Verschlusses; und
- Öffnen und Schließen des Schaltelementes (160; 260; 460; 510₁), gesteuert von der Steuervorrichtung, und nach den zweiten aufeinanderfolgenden Öffnungs- und Schließzyklen des Schaltelementes;
wo bei jedem ersten und jedem zweiten Zyklus der Verschluß (140; 240; 440; 540) während der gesamten oder eines Teils der Zeit geschlossen ist, in der das Schaltelement (160; 260; 460; 560₁) offen ist und umgekehrt.

10. Verfahren nach Anspruch 9, **dadurch gekennzeichnet, dass** diese Schritte des Öffnens und Schließens des Verschlusses (240; 440; 640), und des Öffnens und Schließens des Schaltelementes (260; 360; 460; 610₁, 660₂) so umgesetzt werden, dass der Verschluß (140; 240; 440; 540) während der gesamten Zeit geschlossen ist, in der sich das Schaltelement (160; 260; 460; 510₁) in der offenen Position befindet, und umgekehrt.

11. Verfahren nach Anspruch 9 oder 10, **dadurch gekennzeichnet, dass** es in einem Sichtgerät (200; 300; 400; 500) eingesetzt wird, das außerdem ein Helligkeitsmessgerät (230; 330; 430; 530) enthält, und dadurch, dass es die folgenden Schritte umfasst:
- Erfassung durch das Helligkeitsmessgerät (230; 330; 430; 530) einer Helligkeitsmessung in einer Umgebung außerhalb des Sichtgerätes;
- Empfang dieser Helligkeitsmessung über die Steuervorrichtung (250; 450; 550); und
- Öffnen oder Schließen des Verschlusses (240; 440; 540), und Öffnen oder Schließen des Schaltelementes (260; 460; 510₁), gesteuert von der Steuervorrichtung, in Abhängigkeit von dieser Helligkeitsmessung.

12. Verfahren nach Anspruch 11 **dadurch gekennzeichnet, dass** es die folgenden Schritte umfasst:
- Öffnen und Schließen des Verschlusses (240; 440; 540), gesteuert von der Steuervorrichtung, und entsprechend den ersten aufeinanderfolgenden Öffnungs- und Schließzyklen des Verschlusses; und
- Öffnen und Schließen des Schaltelementes (260; 460; 510₁), gesteuert von der Steuervorrichtung, und entsprechend den zweiten Öffnungs- und Schließzyklen des Schaltelementes;
wo bei jedem ersten und jedem zweiten Zyklus der Verschluß (240; 440; 540) während der gesamten oder eines Teils der Zeit geschlossen ist, in der das Schaltelement (260; 460; 560₁) offen ist und umgekehrt;
und wo jeder erste Zyklus ein Tastverhältnis aufweist, das sich erhöht, wenn der Messwert der Helligkeit steigt, dieses Tastverhältnis ist gleich der Dauer, während der der Verschluß (24 ; 440; 540) sich während dieses Zyklus in der offenen Position befindet, geteilt durch die Gesamtdauer dieses Zyklus.

13. Verfahren nach Anspruch 11 oder 12 **dadurch gekennzeichnet, dass** es die folgenden Schritte umfasst:
- Vergleich der Helligkeitsmessung (Lm) erfasst vom Helligkeitsmessgerät (430; 530) mit einem sogenannten ultra-niedrigen Grenzwert (Vs1);
- wenn diese Helligkeitsmessung (Lm) niedriger ist als der ultra-niedrige Grenzwert (Vs1), Halten des Verschlusses (440; 540) in der geschlossenen Position und Halten des Schaltelementes (560₁) in der offenen Position, gesteuert von der Steuervorrichtung (450; 550).

## Claims

1. Vision apparatus (100; 200; 300; 400; 500) intended to be mounted on the head of a user (100), comprising:
- a night vision device (110; 310; 510₁), configured to form intensified and/or infrared images of a surrounding scene, named first virtual images; and
- an offsetting element (120; 520), at least partially transparent, and configured to, in use, be positioned in front of an eye of the user and project said first virtual images in the field of view of the user;
- a shutter (140; 240; 440; 540) to allow more or less light to pass between the surrounding scene and the eye of the user, positioned in such a way that in use the offsetting element is between the shutter and the eye of the user, and able to have an open position wherein it has a first transmission rate and a closed position wherein it has a second transmission rate, less than the first transmission rate;
- a switching element (160; 260; 460; 560₁), able to have an open position wherein it authorises the emission of the first virtual images by the night vision device or the transfer thereof from the night vision device to the offsetting element, and a closed position wherein it blocks said emission or said transfer; and
- a controlling device (150; 250; 450; 550), configured to control the opening and the closing of the shutter as well as the opening and the closing of the switching element;
**characterised in that** the controlling device (150; 250; 450; 550) has an operating mode wherein it is configured to:
- control first successive cycles of opening and of closing the shutter (140; 240; 440; 540); and
- control second successive cycles of opening and of closing of the switching element (160; 260; 460; 560₁);
where at each first cycle and each second cycle, the shutter (140; 240; 440; 540) is closed during all or a portion of the time during which the switching element (160; 260; 460; 560₁) is open, and inversely.

2. Vision apparatus (100; 200; 300; 400; 500) according to claim 1, **characterised in that** the controlling device (150; 250; 450; 550) has an operating mode wherein it is configured to control the opening and the closing of the shutter as well as the opening and the closing of the switching element in such a way that at each first cycle and each second cycle the shutter (140; 240; 440; 540) is closed during the entire time when the switching element (160; 260; 460; 560₁) is open, and inversely.

3. Vision apparatus (200; 300; 400; 500) according to claim 1 or 2, **characterised in that** it further includes a brightness measuring element (230; 330; 430; 530), for acquiring a brightness measurement in an external environment of the vision apparatus, and **in that** the controlling device (250; 450; 550) has an operating mode wherein it is configured to receive as input a brightness measurement acquired by the brightness measuring element, and to control the opening and the closing of the shutter as well as the opening and the closing of the switching element according to said brightness measurement.

4. Vision apparatus (200; 300; 400; 500) according to claim 3, **characterised in that** the controlling device (250; 450; 550) has an operating mode wherein it is configured to:
- control first successive cycles of opening and of closing the shutter (240; 440; 540); and
- control second successive cycles of opening and of closing of the switching element (260; 460; 560₁);
where at each first cycle and each second cycle, the shutter (240; 440; 540) is closed during all or a portion of the period of time during which the switching element (260; 460; 560₁) is open, and inversely;
and wherein each first cycle has a duty cycle that increases when the value of the brightness measurement increases, said duty cycle being equal to the duration during which the shutter (240; 440; 540) is in the open position during this cycle divided by the total duration of said cycle.

5. Vision apparatus (400; 500) according to claim 3 or 4, **characterised in that** the controlling device further comprises:
- a memory (470; 670), storing a plurality of threshold values; and
- a comparator (451; 551), configured to compare the brightness measurement with at least one among said threshold values;
and **in that** the controlling device (450; 550) is configured to operate according to one among a plurality of predetermined operating modes, according to at least one comparison result provided by the comparator (451; 551), with the operating modes that differ by corresponding rules for controlling the shutter (440; 540) and the switching element (460; 560₁).

6. Vision apparatus (200; 400; 500) according to any of claims 3 to 5, **characterised in that** the brightness measuring element (230; 430; 530) comprises a light sensor separate from the night vision device (210; 410; 510₁).

7. Vision apparatus (300) according to any of claims 3 to 5, **characterised in that** the brightness measuring element (330) is formed by a portion at least of the night vision device (310).

8. Vision apparatus (500) according to any of claims 1 to 7, **characterised in that** it further comprises an augmented reality vision device (510₂) configured to generate images named second virtual images, and **in that** the offsetting element (520) is configured to further project said second virtual images in the field of view of the user.

9. Method implemented in a vision apparatus (100; 200; 300; 400; 500) according to any of claims 1 to 8, **characterised in that** it comprises the following steps:
- openings and closings of the shutter (140; 240; 440; 540), controlled by the controlling device, and according to first successive cycles of opening and of closing of the shutter; and
- openings and closings of the switching element (160; 260; 460; 560₁), controlled by the controlling device, and according to second successive cycles of opening and of closing of the switching element;
where at each first cycle and each second cycle, the shutter (140; 240; 440; 540) is closed during all or a portion of the time during which the switching element (160; 260; 460; 560₁) is open, and inversely.

10. Method according to claim 9, **characterised in that** said steps of openings and closings of the shutter (240; 440; 640), and of opening and closings of the switching element (260; 360; 460; 610₁, 660₂), are implemented in such a way that the shutter (140; 240; 440; 540) is in the closed position during the entire time when the switching element (160; 260; 460; 560₁) is in the open position, and inversely.

11. Method according to claim 9 or 10, **characterised in that** it is implemented in a vision apparatus (200; 300; 400; 500) that further includes a brightness measuring element (230; 330; 430; 530), and **in that** it comprises the following steps:
- acquiring, by the brightness measuring element (230; 330; 430; 530), of a brightness measurement in an external environment of the vision apparatus;
- receiving of said brightness measurement by the controlling device (250; 450; 550); and
- opening or closing of the shutter (240; 440; 540), and opening or closing of the switching element (260; 460; 560₁), controlled by the controlling device according to said brightness measurement.

12. Method according to claim 11, **characterised in that** it comprises the following steps:
- openings and closings of the shutter (240; 440; 540), controlled by the controlling device, and according to first successive cycles of opening and of closing of the shutter; and
- openings and closings of the switching element (260; 460; 510₁), controlled by the controlling device, and according to second successive cycles of opening and of closing of the switching element;
where at each first cycle and each second cycle, the shutter (240; 440; 540) is closed during all or a portion of the time during which the switching element (260; 460; 560₁) is open, and inversely;
and wherein each first cycle has a duty cycle that increases when the value of the brightness measurement increases, said duty cycle being equal to the duration during which the shutter (240; 440; 540) is in the open position during this cycle divided by the total duration of said cycle.

13. Method according to claim 11 or 12, **characterised in that** it includes the following steps:
- comparing the brightness measurement (Lm) acquired by the brightness measuring element (430; 530) with a so-called ultra low threshold value (Vs1);
- when said brightness measurement (Lm) is less than the ultra low threshold value (Vs1), maintaining the shutter (440; 540) in the closed position and maintaining the switching element (560₁) in the open position, controlled by the controlling device (450; 550).
